(19) Europäisches Patentamt
European Patent Office
Office européen des brevets

(11) **EP 2 818 345 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(51) Int Cl.:
***B60G 11/27*** *(2006.01)*　　***B60N 2/50*** *(2006.01)*
***B60N 2/52*** *(2006.01)*　　***F16F 9/50*** *(2006.01)*
***F16F 9/04*** *(2006.01)*

(21) Anmeldenummer: **14173618.1**

(22) Anmeldetag: **24.06.2014**

(54) **Vorrichtung mit einem Federungssystem**

Device with a suspension system

Dispositif équipé d'un système de ressort

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2013 DE 102013106709**

(43) Veröffentlichungstag der Anmeldung:
**31.12.2014 Patentblatt 2015/01**

(73) Patentinhaber: **GRAMMER AG
92224 Amberg (DE)**

(72) Erfinder: **Lorey, Konstantin
92546 Schmidgaden (DE)**

(74) Vertreter: **Hannke, Christian
Hannke Bittner & Partner
Patent- und Rechtsanwälte mbB
Prüfeninger Straße 1
93049 Regensburg (DE)**

(56) Entgegenhaltungen:
**EP-A1- 2 062 758　　EP-A1- 2 468 567
EP-A2- 1 464 866　　WO-A1-91/04168
WO-A1-99/33676　　DE-A1-102008 037 547
DE-A1-102008 050 142　　DE-B3-102008 016 685**

**Beschreibung**

Die vorliegende Erfindung betrifft eine Vorrichtung mit einem Federungssystem, welches Federungssystem ein mit einer Masse beaufschlagtes erstes Teil, eine zweites Teil sowie mindestens eine zwischen dem ersten Teil und diesem zweiten Teil angeordnete Luftfeder aufweist, wobei mindestens eine Zusatzvolumeneinrichtung für Luft vorgesehen ist, deren Volumen gesteuert zu einem Volumen der Luftfeder hinzuschaltbar ist, sowie eine Steuerungseinrichtung für die Hinzuschaltung des Volumens der Zusatzvolumeneinrichtung, gemäß dem Oberbegriff des Patentanspruches 1.

Es sind aus dem Stand der Technik Vorrichtungen mit einem Federungssystem umfassend eine Zusatzvolumeneinrichtung bekannt. Je nach Bedarf kann in derartigen, bereits aus dem Stand der Technik bekannten Vorrichtungen, die Zusatzvolumeneinrichtung beispielsweise händisch hinzugeschalten und/oder weggeschalten werden, um eine Kraft-Weg-Kennlinie der Luftfeder einstellen zu können. "Kraft-Weg-Kennlinie" bezeichnet dabei eine Kennlinie der Luftfeder, bei der eine Federkraft der Luftfeder gegen einen Ein- und/oder Ausfederweg der Luftfeder in einem zweidimensionalen Koordinatensystem aufgetragen ist.

Ist beispielsweise das Volumen der Zusatzvolumeneinrichtung zu der Luftfeder hinzugeschaltet, so ermöglicht dies eine Einstellung der Federungseigenschaften hin zu einer weicheren Dämpfung der Luftfeder, wohingegen bei Wegschaltung der Zusatzvolumeneinrichtung von der Luftfeder ein Einfedern härter ausgestaltet ist. Mit anderen Worten kann über die Zusatzvolumeneinrichtung je nach Bedarf über ein Hinzuschalten oder ein Wegschalten eine Kraft-Weg-Kennlinie der Luftfeder eingestellt werden, ohne dass der Luftdruck in der Luftfeder verändert wird. Es sind daher größere Federwege bei gleichem Druck (Federkraft) möglich. Somit sind sanfte, niederfrequente Sitzbewegungen sowie mehr Sitzkomfort realisiert.

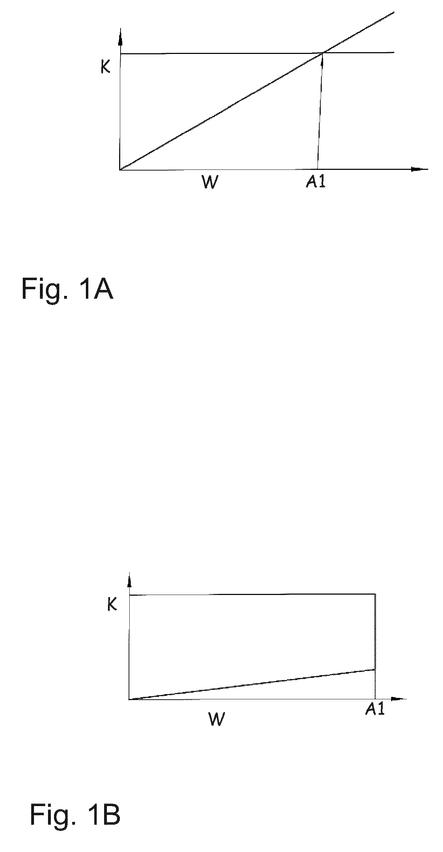

Fährt das Fahrzeug beispielsweise über unbefestigtes und unebenes Gebiet, ist denkbar, dass die Zusatzvolumeneinrichtung nicht hinzugeschaltet ist, so dass ein unmittelbarer Anschlag an einem Federendwegelement vermieden wird. Eine derartige Kraft-Weg-Kennlinie ist in der Figur 1A gezeigt ("K" steht für Kraft und "W" steht für Weg), aus der hervorgeht, dass am Anschlagspunkt A1 oder bis zum Anschlagspunkt A1 die Luftfeder kontinuierlich gemäß einer vorgebbaren Steigung innerhalb der Kraft-Weg-Kennlinie einfedert. Dies bietet den Vorteil von mehr Federkraft bei starker Anregung und ein Vermeiden von für den Fahrer unvorteilhaften und unangenehmen plötzlichen Anschlägen an dem Federendwegelement der Luftfeder bei einem vollkommenen Einfedern der Luftfeder.

Allerdings bietet eine derartig steile Einstellung der Kennlinie beispielsweise durch Wegschaltung der Zusatzvolumeneinrichtung von der Luftfeder eine generelle Komfortminderung in einem normalen Fahrbetrieb und beispielsweise schlechtere "SEAT-Werte", also Messwerte bezüglich einzelner physikalischer Messvariablen und die damit verbundenen Auswirkungen auf den Insassen.

Fährt beispielsweise anschließend das Fahrzeug über eine gut befestigte Straße ohne größere Unebenheiten, so kann durch ein Hinzuschalten des Zusatzvolumens zu der Luftfeder die Kraft-Weg-Kennlinie flacher werden , so dass die Luftfeder weicher einfedern kann, was den Komfort im normalen Fahrbetrieb wesentlich erhöht. Dies birgt aber andererseits wiederum den Nachteil, dass, falls ein auf der befestigten Straße nicht zu erwartendes Schlagloch auftaucht, bei Überfahren des Schlaglochs enorm hohe Federwege bei einer derartig starken Anregung zurückgelegt werden und die Gefahr besteht, dass bei plötzlichem Erreichen des Anschlagspunktes A1 das Einfedern abrupt zum Ende kommt, was sich für den Fahrzeuginsassen durch schlagartige Erhöhung der auf ihn einwirkenden Kraft auswirkt (siehe Figur 1B) Ein Federungssystem entsprechend den Merkmalen des Oberbegriffs des Anspruchs 1 ist aus der EP2468567 bekannt.

Es ist daher eine Aufgabe der vorliegenden Erfindung, eine Vorrichtung mit einem Federsystem anzugeben, bei der individuell in Abhängigkeit eines Ein- und/oder Ausfederweges und/oder -geschwindigkeit und/oder -beschleunigung eines ersten Teils, beispielsweise einer Sitzfläche des Fahrzeugsitzes, relativ zum zweiten Teil der Vorrichtung, beispielsweise einem Bodenelement des Fahrzeugsitzes, eine Kraft-Weg-Kennlinie des Fahrzeugsitzes von selbst ohne das Zutun und eines Betätigens eines Schalters oder sonstiger händischer Betätigungen an der Vorrichtung einstellbar ist, um den Sitzkomfort unabhängig von der Beschaffenheit der zu befahrenden Strecke kontinuierlich zu erhalten.

Diese Aufgabe wird durch den Gegenstand des Patentanspruches 1 gelöst. Um nun eine Vorrichtung mit einem Federungssystem anzugeben, bei der in besonders einfacher und eleganter Weise eine derartige Kraft-Weg-Kennlinie der Luftfeder während des Ein- und/oder Ausfederns des ersten Teils sich individuell von selbst an die jeweiligen Straßenverhältnisse anpasst, macht die vorliegende Erfindung unter anderem von der Idee Gebrauch, dass über die Steuerungseinrichtung ein Druckspeicher und die Zusatzvolumeneinrichtung derart mit der Luftfeder fluidisch in Kontakt stehen, dass die Kraft-Weg-Kennlinie der Luftfeder in Abhängigkeit eines Ein- und/oder Ausfederweges und/oder -geschwindigkeit und/oder -beschleunigung des ersten Teils relativ zum zweiten Teil vorgebbar über eine Hinzuschaltung der Zusatzvolumeneinrichtung und/oder des Druckspeichers durch die Steuerungseinrichtung während des Ein- und/oder Ausfederns des ersten Teils relativ zum zweiten Teil veränderbar ist. Erfindungsgemäß handelt es sich um ein rein mechanisches Steuern. Das heißt, die hier beschriebene Vorrichtung und insbesondere die Steuerungseinrichtung sind frei von elektrischen Bauteilen, was zu einem besonders robusten und langlebigen Bauteil unabhängig von elektrischer Energie führt.

Wie bereits obig erwähnt, ermöglicht die vorliegende Erfindung die Einstellung einer flachen Kraft-Weg-Kennlinie, das heißt einer besonders weichen Einfederung im Fahrbetrieb beispielsweise über einer befestigten Straße, in der weniger Dämpferkraft erforderlich ist und andererseits die Einstellung einer steilen Kraft-Weg-Kennlinie, das heißt einer beispielsweise besonders harten Einfederung bei höheren Anregungen, so dass harte Anschläge beispielsweise beim Überfahren eines Schlagloches jeweils allein durch die Steuerungseinrichtung vermieden werden.

Zudem bietet die vorliegende Vorrichtung mit einem Federungssystem den Vorteil eines Energieabbaus beispielsweise nach einem Schlagloch ohne Luftverlust, da das vorliegende System vorzugsweise geschlossen ist. Zudem ist ein Sicherheitsrisiko vermieden oder ein Sitzausfall bei der Störung des Systems unterbunden, da die vorliegende Vorrichtung durch die nun beanspruchte Steuerungseinrichtung besonders robust im Aufbau ist und zudem über den Verzicht von beispielsweise zusätzlichen elektronischen Geräten zur Einstellung einer Federhärte der Luftfeder niedrige Herstellungskosten einfordert.

Gemäß zumindest einer Ausführungsform umfasst die Vorrichtung mit einem Federungssystem ein Federungssystem, welches ein mit einer Masse beaufschlagtes erstes Teil, ein zweites Teil sowie mindestens eine zwischen diesem ersten Teil und diesem zweiten Teil angeordnete Luftfeder aufweist. Dabei ist mindestens eine Zusatzvolumeneinrichtung für Luft vorgesehen, deren Volumen gesteuert zu dem Volumen der Luftfeder hinzuschaltbar ist, sowie eine Steuerungseinrichtung für die Hinzuschaltung des Volumens der Zusatzvolumeneinrichtung. Zudem stehen ein Druckspeicher und die Zusatzvolumeneinrichtung über die Steuerungseinrichtung derart mit der Luftfeder fluidisch in Kontakt, dass eine Kraft-Weg-Kennlinie der Luftfeder in Abhängigkeit eines Ein- und/oder Ausfederweges und/oder -geschwindigkeit und/oder -beschleunigung des ersten Teils relativ zum zweiten Teil vorgebbar über ein Hinzuschaltung des Zusatzvolumens und/oder des Druckspeichers durch die Steuerungseinrichtung während des Ein- und/oder Ausfederns des ersten Teils relativ zum zweiten Teil veränderbar ist.

Gemäß zumindest einer Ausführungsform umfasst die Steuerungseinrichtung einen Zylinder, innerhalb dessen ein beweglicher Druckkolben angeordnet ist, wobei über eine Bewegung und/oder eine vorgebbare Stellung des Druckkolbens innerhalb des Zylinders das Zusatzvolumen und/oder der Druckspeicher hinzuschaltbar sind. Insbesondere wird durch eine Veränderung des Innendrucks innerhalb der Luftfeder der Druckkolben im Zylinder der Steuerungseinrichtung hin und her bewegt, wobei über eine derartige Druckveränderung innerhalb der Luftfeder unmittelbar rein mechanisch die Zusatzvolumeneinrichtung über ihren Innendruck beispielsweise durch innerhalb der Steuerungsrichtung und/oder im Druckkolben vorgesehene Öffnungen und Kanäle hinzugeschaltet werden kann. Eine derartige Ausbildung der Steuerungseinrichtung umfassend den innerhalb der Steuerungseinrichtung beweglichen Druckkolben gibt daher dem Anwender eine besonders robuste und kostengünstige "Regelungseinrichtung" an die Hand, welche auch über einen langen Zeitraum besonders schnell und innerhalb von kurzen Reaktionszeiten auf individuelle Innendruckveränderungen innerhalb der Luftfeder reagieren kann.

Gemäß zumindest einer Ausführungsform umfasst die Steuerungseinrichtung zumindest eine Ventileinrichtung, über welche die Stellung des Druckkolbens innerhalb der Zylinders vorgebbar veränderbar und/oder einstellbar ist, wobei in einer Offen-Stellung der Ventileinrichtung das Zusatzvolumen und/oder der Druckspeicher fluidisch zu der Luftfeder hinzugeschaltet sind. Vorzugsweise ist die Zusatzvolumeneinrichtung nur dann zu der Luftfeder hinzugeschaltet, wenn die Ventileinrichtung in einer Offen-Stellung betrieben ist. Dazu können die Ventileinrichtung und deren Ventilbauelemente innerhalb des Zylinders der Steuerungseinrichtung beispielsweise an dem Druckkolben selbst und/oder an sonstigen Innenwandungen der Steuerungseinrichtung angeordnet sein. Mit anderen Worten kann die Stellung des Druckkolbens innerhalb des Zylinders der Steuerungseinrichtung über eine entsprechende Offen- und/oder Zu-Stellung der Ventileinrichtung genau vorgegeben werden, wodurch wiederum, das heißt über die individuelle Steuerung des Druckkolbens, unmittelbar das Zusatzvolumen zu der Luftfeder hinzugeschaltet oder weggeschaltet wird.

Gemäß zumindest einer Ausführungsform ist die Ventileinrichtung in Form eines Flatterventils ausgebildet, welches an dem Druckkolben über seiner Luftöffnung, über welche die Zusatzvolumeneinrichtung mit der Luftfeder fluidisch miteinander verbindbar ist, angeordnet ist. Die Ausbildung der Ventileinrichtung in Form eines Flatterventils ermöglicht eine besonders kostengünstige Möglichkeit, auf bereits geringe und/oder schnelle Luftströmungswechsel und sich ändernde Strömungsintensitäten innerhalb der Luftfeder zu reagieren, wobei ein derartiges Flatterventil zudem nicht nur besonders einfach an dem Druckkolben über seiner Luftöffnung anbringbar ist, sondern auch ebenso kostengünstig herstellbar ist. Dabei kann es sich bei der Luftöffnung um eine stets innerhalb des Zylinders angeordnete Öffnung eines innerhalb des Druckkolbens in Hubrichtung vollständig durchgehenden Längskanals handeln.

Gemäß zumindest einer Ausführungsform ist die Ventileinrichtung dann in der Offen-Stellung betreibbar, wenn ein Innendruck des Druckspeichers größer als ein Innendruck der Luftfeder ist, wobei über die Offen-Stellung der Ventileinrichtung der Druckkolben derart innerhalb des Zylinders verschiebbar ist, dass die Zusatzvolumeneinrichtung zuschaltbar ist. Ist die Ventileinrichtung in Form des Flatterventils ausgebildet, so ist Folgendes vorstellbar:

Befindet sich das Flatterventil in einer Offen-Stellung, so kann Luft von dem Zusatzvolumen über den Längskanal im Druckkolben aus der Luftöffnung herausströmen und anschließend in die Luftfeder hineinströmen, sofern der Innendruck innerhalb des Zusatzvolumens und/oder des Druckspeichers größer als der Innendruck innerhalb der Luftfeder ist und/oder eine Luftströmung ausgehend von dem Zusatzvolumen in Richtung der Luftfeder strömt. In einer derartigen Offen-Stellung ist daher eine Kraft-Weg-Kennlinie der Luftfeder besonders flach, wohingegen bei einem geschlossenen Flatterventil ein Luftinnendruck innerhalb der Luftfeder größer ist als ein Innendruck innerhalb des Zusatzvolumens und/oder die Luftströmung ausgehend von der Luftfeder in Richtung des Zusatzvolumens strömt, so dass die Zusatzvolumeneinrichtung und/oder der Druckspeicher von der Luftfeder weggeschaltet ist, wodurch ein hartes Einfedern, das heißt eine besonders steile Kraft-Weg-Kennlinie, eingestellt ist.

Gemäß zumindest einer Ausführungsform ist die Ventileinrichtung dann in der Zu-Stellung betreibbar, wenn ein Innendruck des Druckspeichers gleich einem Innendruck der Luftfeder ist, wobei ein Innendruck der Zusatzvolumeneinrichtung kleiner als einer der beiden anderen Innendrücke ist. Über einer derartige Hinzuschaltung des Druckspeichers kann daher die Wegschaltung und/oder Hinzuschaltung besonders fein einjustiert werden.

Gemäß zumindest einer Ausführungsform öffnet oder schließt in Abhängigkeit des Ein- und/oder Ausfederweges und/oder Geschwindigkeit und/oder Beschleunigung des ersten Teils relativ zu dem zweiten Teil und des davon abhängigen Innendrucks der Luftfeder das Flatterventil selbsttätig. Mittels des hier beschriebenen Flatterventils ist es daher nicht nur möglich, besonders schnell und individuell bereits auf geringe Druckunterschiede zwischen dem Innendruck in der Luftfeder und dem Innendruck innerhalb des Zusatzvolumens das Zusatzvolumen hinzuzuschalten oder wegzuschalten, sondern eine derartige Hinzuschaltung kann über das hier beschriebene Flatterventil während des Ein- und/oder Ausfederns ebenso in Abhängigkeit der obig genannten physikalischen Variablen während des Fahrens ohne Betätigung einer gesonderten Ventilstellung oder einer Handbetätigung des Fahrers an der Steuereinrichtung unternommen werden.

Gemäß zumindest einer Ausführungsform ist nach dem Einfedern und/oder Ausfedern des ersten Teils ein Druckausgleich durch die Steuerungseinrichtung ausführbar, wobei im Druckausgleich die jeweiligen Innendrücke der Luftfeder, der Zusatzvolumeneinrichtung und des Druckspeichers gleich sind. Mit anderen Worten kann mittels der hier beschriebenen Steuerungseinrichtung beispielsweise nach dem Einfedern und dem Überfahren beispielsweise eines Bordsteins mittels des hier beschriebenen Druckausgleichs ein Druckgleichgewicht innerhalb der gesamten Vorrichtung erzeugt werden, so dass beispielsweise der hier beschriebene Druckkolben zum Stillstand innerhalb des Zylinders der Steuerungseinrichtung kommt und nach dem Überfahren des Bordsteins und einem darauffolgenden Druckausgleich die Vorrichtung wieder beispielsweise weich einfedert, während die Vorrichtung noch während des Überfahrens des Bordsteins entsprechend einer harten Kraft-Weg-Kennlinie eingefedert hat.

Gemäß zumindest einer Ausführungsform ist die Luftfeder mit der Zusatzvolumeneinrichtung zusätzlich über eine Druckkolbenfluidverbindung gekoppelt, wobei die Druckkolbenfluidverbindung in Form einer Fluidkanals innerhalb des Druckkolbens ausgebildet ist, und wobei über die Druckkolbenfluidverbindung, über eine Bewegung des Druckkolbens im Zylinder, die Zusatzvolumeneinrichtung hinzuschaltbar ist. Denkbar ist in diesem Zusammenhang, dass die Zusatzvolumeneinrichtung über eine Fluidleitung mit der Steuerungseinrichtung gekoppelt ist und über eine derartige Kopplungsstelle in den Zylinder der Steuerungseinrichtung ebenso Luft einführbar ist. Insbesondere können die Steuerungseinrichtung und der Zylinder eine Öffnung in der Zylinderwand aufweisen, über die die Zusatzvolumeneinrichtung mittels der Fluidleitung gekoppelt ist. Überlappt nun eine Öffnung der Druckkolbenfluidverbindung mit der Öffnung in dem Zylinder, kann die sich innerhalb der Zusatzvolumeneinrichtung befindliche Luft zusätzlich über die Fluidleitung durch den Druckkolben hindurch in die Luftfeder gelangen, sofern der Innendruck des Zusatzvolumens größer als der Innendruck der Luftfeder ist. Über eine derartige Fluidleitung kann daher das Zusatzvolumen schneller und/oder mit einem stärkeren Fluidaustausch zu der Luftfeder hinzugeschaltet werden.

Gemäß zumindest einer Ausführungsform ist das erste Teil ein schwingendes Teil und das zweite Teil ein feststehendes Teil. Insbesondere kann es sich bei dem ersten Teil um eine einfedernde Sitzfläche und bei dem zweiten Teil beispielsweise um ein Sitzgestell und/oder ein Element des Fahrzeugbodens handeln. Insbesondere kann es sich bei der Vorrichtung mit einem Federungssystem auch um einen Fahrzeugsitz handeln, welcher in beispielsweise einem Pkw und/oder einem Lkw eingebaut ist. Insofern kann die hier beschriebene Vorrichtung und insbesondere die hier beschriebene Steuerungseinrichtung besonders einfach in derartigen Pkws und/oder Lkws Verwendung finden, was ein ganz besonders breites Angebot an Verwendungsmöglichkeiten für die hier beschriebene Steuerungseinrichtung und die Vorrichtung insgesamt bietet, ohne dabei separate Steuerungseinrichtungen anbieten zu müssen, die jeweils nur einzeln für entsprechende Straßenverhältnisse geeignet sind.

Gemäß zumindest einer Ausführungsform ist das erste Teil mit dem zweiten Teil über eine Führungseinrichtung gekoppelt. Insbesondere kann es sich bei der Führungseinrichtung um Führungselemente in Form von ineinander greifenden Führungsstäben und/oder einem Scherengestell handeln. Das Scherengestell kann mit zwei Scherenarmen gebildet sein, wobei vorstellbar ist, dass die Luftfeder zwischen einem der beiden Scherenarme des Scherengestells und dem zweiten Teil angeordnet ist, so dass über eine Bewegung eines des jeweiligen Scherenarmes in Richtung des zweiten Teils beispielsweise eine Quetschung der Luftfeder und damit eine Innendruckerhöhung innerhalb der Luftfeder erfolgt, wobei in einem solchen Fall je nach Größe und nach beispielsweise Stärke der Einfederung die Zusatzvolumeneinrichtung, wie obig beschrieben, vorgebbar hinzuschaltbar ist.

Im Folgenden wird die hier beschriebene Vorrichtung anhand eines Ausführungsbeispiels und den dazugehörigen Figuren näher erläutert.

Die Figuren 1A und 1B zeigen Kraft-Weg-Kennlinien von aus dem Stand der Technik bekannten Vorrichtungen bei Hinzuschaltung eines Zusatzvolumens und ohne die Hinzuschaltung eines Zusatzvolumens zu einer Vorrichtung mit einem Federungssystem umfassend eine Luftfeder.

Die Figur 2A zeigt in einer schematischen Seitenansicht eine auf einem Wagen befestigte hier beschriebene Vorrichtung mit einem Federungssystem, welches sich in Pfeilrichtung bewegt, sowie eine zu der Vorrichtung korrespondierende Kraft-Weg-Kennlinie.

Die Figur 2B zeigt in einer schematischen Darstellung einen pneumatischen Regelkreis der in der Figur 2A beschriebenen Vorrichtung mit einem Federungssystem.

Die Figuren 3A bis 6B zeigen verschiedene Weg-Phasen und dazu jeweils korrespondierende Kraft-Weg-Kennlinien in Bezug auf eine Einfederung der gezeigten Vorrichtung mit einem Federungssystem.

Die Figur 7 zeigt in einem Diagramm verschiedene Kurven, in denen ein Einfederweg gegen eine jeweilige Weg-Phase gezeichnet ist.

In den Ausführungsbeispielen und in den Figuren sind gleiche oder gleichwirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

In der Figur 1A ist eine Situation dargestellt, in der das Fahrzeug beispielsweise über unbefestigtes und unebenes Gebiet fährt. In dieser Situation ist die Zusatzvolumeneinrichtung nicht hinzugeschaltet, so dass ein unmittelbarer Anschlag an einem Federendwegelement vermieden wird. Eine derartige Kraft-Weg-Kennlinie ist in der Figur 1A gezeigt, aus der hervorgeht, dass am Anschlagspunkt A1 oder bis zum Anschlagspunkt A1 die Luftfeder kontinuierlich gemäß einer vorgebbaren Steigung innerhalb der Kraft-Weg-Kennlinie einfedert. Dies bietet den Vorteil von mehr Federkraft bei starker Anregung und ein Vermeiden von für den Fahrer unvorteilhaften und unangenehmen plötzlichen Anschlägen an das Federendwegelement der Luftfeder bei einem vollkommenen Einfedern der Luftfeder.

Allerdings bietet eine derartig steile Einstellung der Kennlinie beispielsweise durch Wegschaltung der Zusatzvolumeneinrichtung von der Luftfeder eine generelle Komfortminderung in einem normalen Fahrbetrieb und beispielsweise schlechtere "SEAT-Werte".

Fährt beispielsweise anschließend das Fahrzeug über eine gut befestigte Straße ohne größere Unebenheiten, so kann durch ein Hinzuschalten des Zusatzvolumens zu der Luftfeder die Kraft-Weg-Kennlinie flacher werden , so dass die Luftfeder weicher einfedern kann, was den Komfort im normalen Fahrbetrieb wesentlich erhöht. Dies birgt aber andererseits wiederum den Nachteil, dass, falls ein auf der befestigten Straße nicht zu erwartendes Schlagloch auftaucht, bei Überfahren des Schlaglochs enorm hohe Federwege bei einer derartig starken Anregung zurückgelegt werden und die Gefahr besteht, dass bei plötzlichem Erreichen des Anschlagspunktes A1 das Einfedern abrupt zum Ende kommt, was sich auf den Fahrzeuginsassen durch schlagartige Erhöhung der auf ihn einwirkenden Kraft auswirkt (siehe Figur 1 B).

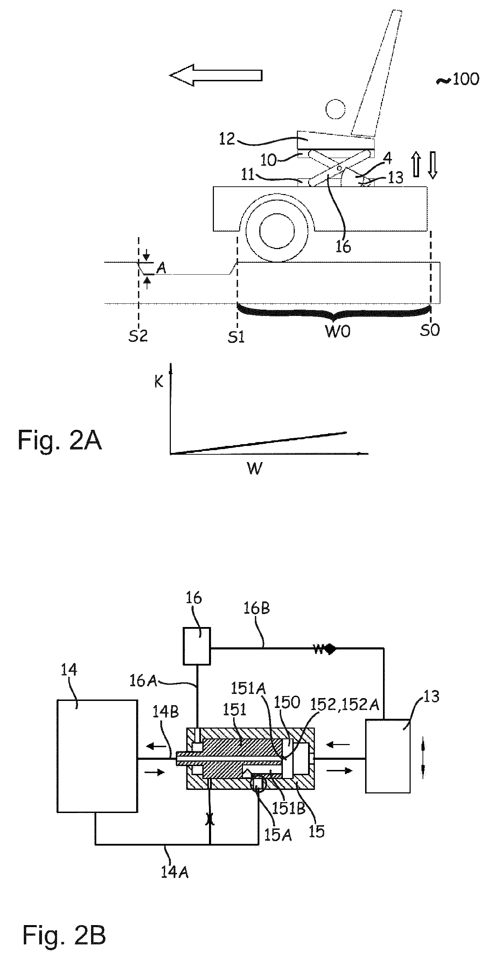

In der Figur 2A ist anhand einer schematischen Seitenansicht ein Wagen umfassend ein Ausführungsbeispiel gemäß vorliegender Erfindung gezeigt, wobei sich der Wagen in Pfeilrichtung entlang einer Straße bewegt, wobei auf dem Wagen eine Vorrichtung 100 mit einem Federungssystem montiert ist. Vorliegend handelt es sich bei der Vorrichtung 100 mit einem Federungssystem um einen Fahrzeugsitz. Dabei umfasst die Vorrichtung 100 ein Federungssystem 4, welches ein mit einer Masse 12 beaufschlagtes erstes Teil 10, ein zweites Teil 11 sowie eine zwischen dem ersten Teil 10 und diesem zweiten Teil 11 angeordnete Luftfeder 13 aufweist. Dabei ist das erste Teil 10 ein schwingendes Teil und das zweite Teil 11 fest mit dem Fahrzeugboden verbunden, wobei das erste Teil 10 und das zweite Teil 11 durch eine Führungseinrichtung 17, vorliegend ein Scherengestell, zueinander schwingend bewegbar sind (dargestellt durch die nach oben und nach unten gerichteten kleineren Pfeile).

Insbesondere ist aus der Figur 2A erkennbar, dass die Luftfeder 13 zwischen einem der Scherenarme des Scherengestells der Führungseinrichtung 17 und dem zweiten Teil 11 angeordnet ist, so dass über eine Bewegung des ersten Teils 10 beispielsweise in Richtung des zweiten Teils 11, das heißt bei einem Einfedern, die Luftfeder 13 beispielsweise zusammengedrückt und/oder zusammengequetscht wird. Zudem ist aus der Figur 2A erkennbar, dass sich dort das Fahrzeug in einer ersten Wegphase W0 zwischen den Wegpunkten S0 und S2 befindet und in dieser Phase das erste Teil 10 eine standardisierte Höhe H zu dem Fahrzeugboden einnimmt. Entlang eines derartigen Wegabschnittes zwischen den Punkten S0 und S1 ist es daher besonders vorteilhaft, wenn es sich bei der Kraft-Weg-Kennlinie um eine besonders flache Kennlinie handelt, wie es in der Figur 2A dargestellt ist. Eine derartige flache Kennlinie birgt daher die Möglichkeit einer besonders komfortablen und weichen Einfederung, was zu einem besonders hohen Sitzkomfort führt.

In der Figur 2B ist anhand einer schematischen Darstellung ein Regelkreis der Vorrichtung 100 zum Regeln, das heißt zum Einstellen einer Kraft-Weg-Kennlinie der Luftfeder 13 während des Ein- und/oder Ausfederns des ersten Teils 10 relativ zum zweiten Teil 11 gezeigt. Erkennbar ist, dass die Vorrichtung 100 neben der Luftfeder 13 eine Zusatzvolumeneinrichtung 14 für Luft umfasst, wobei das Volumen der Zusatzvolumeneinrichtung 14 mittels einer Steuerungseinrichtung 15 zu dem Volumen der Luftfeder 13 hinzuschaltbar ist. Darüber hinaus stehen über die Steuerungseinrichtung 15 ein Druckspeicher 16 und die Zusatzvolumeneinrichtung 14 derart mit der Luftfeder 13 fluidisch in Kontakt, dass die Kraft-Weg-Kennlinie der Luftfeder 13 in Abhängigkeit eines Ein- und/oder Ausfederweges und/oder Geschwindigkeit und/oder Beschleunigung des ersten Teils 10 relativ zum zweiten Teil 11 vorgebbar über eine Hinzuschaltung der Zusatzvolumeneinrichtung 14 und/oder des Druckspeichers 16 durch die Steuerungseinrichtung 15 während des Ein- und/oder Ausfederns des ersten Teils 10 relativ zum zweiten Teil 11 veränderbar ist.

Im Detail ist aus der Figur 2B erkennbar, dass die Steuerungseinrichtung 15 einen Zylinder 150 umfasst, innerhalb dessen ein beweglicher Druckkolben 151 angeordnet ist, wobei über eine Bewegung des Druckkolbens innerhalb des Druckkolbens 151 innerhalb des Zylinders 150 die Zusatzvolumeneinrichtung 14 hinzuschaltbar ist. Das Hinzuschalten erfolgt innerhalb der Steuerungseinrichtung 15 über eine Ventileinrichtung 152, welche von der Steuerungseinrichtung 15 umfasst ist, über welche die Stellung des Druckkolbens 151 innerhalb des Zylinders 150 vorgebbar veränderbar ist, wobei nur in einer Offen-Stellung der Ventileinrichtung 152 die Zusatzvolumeneinrichtung 15 und der Druckspeicher 16 fluidisch zu der Luftfeder 13 hinzugeschaltet sind. Insbesondere ist vorliegend die Ventileinrichtung 152 in Form eines Flatterventils 152A ausgebildet, welches an dem Druckkolben 151 über seiner Luftöffnung 151 A, über welche die Zusatzvolumeneinrichtung 14 mit der Luftfeder 3 fluidisch miteinander verbindbar ist, angeordnet ist. Dabei ist die Ventileinrichtung 152 und insbesondere das Flatterventil 152A dann in der Offen-Stellung betrieben, wenn ein Innendruck P3 des Druckspeichers 16 zumindest so groß ist wie ein Innendruck P1 der Luftfeder 13, wobei über die Offen-Stellung der Ventileinrichtung 152 der Druckkolben 151 derart innerhalb des Zylinders 150 verschiebbar ist, dass die Zusatzvolumeneinrichtung 14 hinzuschaltbar ist. Eine derartige Offen-Stellung des Flatterventils 152 ist also in der Figur 2B gezeigt, wobei während der Fahrt zwischen den Punkten S0 und S1 die jeweiligen Innendrücke P1, P2 und P3 der Luftfeder 13, der Zusatzvolumeneinrichtung 14 und des Druckspeichers 15 gleich sind, so dass ein Druckgleichgewicht herrscht und der Druckkolben 151 somit innerhalb des Zylinders 150 stillsteht. Mit anderen Worten ist durch das geöffnete Flatterventil 152A das Zusatzvolumen 14 zu der Luftfeder 13 hinzugeschaltet, so dass eine Kraft-Weg-Kennlinie, wie in der Figur 2A gezeigt, besonders flach ausgestaltet ist.

Zudem umfasst die hier beschriebene Vorrichtung 100 eine Druckkolbenfluidverbindung 151 B, über welche neben der Einleitung von Luft aus der Zusatzvolumeneinrichtung 14 in die Luftfeder 13 über die Luftöffnung 151A innerhalb des Druckkolbens 151 zusätzlich Luft über einen breiten Querschnitt des Druckkolbens 151 in die Luftfeder 13 eingeleitet werden kann, aufweist. Dabei ist die Druckkolbenfluidverbindung 151 B in Form eines Fluidkanals innerhalb des Druckkolbens 151 ausgebildet. Erkennbar ist, dass zur Durchleitung von zusätzlicher Luft durch diese Druckkolbenfluidverbindung 151 B innerhalb der Steuerungseinrichtung 15 zumindest eine Öffnung 15A in ein Gehäuse der Steuerungseinrichtung 15 eingebracht ist, welche vollständig durch das Gehäuse der Steuerungseinrichtung 15 hindurchgeht. Eine Anschlussöffnung der Druckkolbenfluidverbindung 151 B ist vorliegend zumindest teilweise überlappbar innerhalb des Zylinders 151 anordenbar, wobei in der Figur 2B dargestellt ist, dass der Druckkolben 151 am linken Anschlag angelangt ist, wodurch die Anschlussöffnung der Druckkolbenfluidverbindung 151 B und die Öffnung 15A im Gehäuse des Druckkolbens 151 nicht überlappen, so dass eine Luftverbindung von der Zusatzvolumeneinrichtung 14 über eine Fluidleitung 14A, welche in die Öffnung 15A mündet, durch die Druckkolbenfluidverbindung 151 B durch den Druckkolben 151 selbst versperrt ist. Mit anderen Worten ist die Zusatzvolumeneinrichtung 14 ausschließlich über eine Fluidleitung 14B und das geöffnete Flatterventil 152A zu der Luftfeder 13 hinzugeschaltet. Insofern kann über die jeweilige Stellung des Druckkolbens 151 innerhalb des Zylinders 150 je nach Druckunterschied zwischen dem Innendruck P1 innerhalb der Luftfeder 13 und dem Innendruck P2 innerhalb der Zusatzvolumeneinrichtung 14 über die Druckkolbenfluidverbindung 151 B eine weitere Fluidverbindung hinzugeschaltet oder weggeschaltet werden.

Darüber hinaus ist aus der Figur 2B erkennbar, dass der Druckspeicher 16 zur Speicherung eines Druckes ausgebildet und vorgesehen ist, wobei der Druckspeicher 16 über eine Fluidleitung 16A mit der Steuerungseinrichtung 15 und insbesondere mit dem Zylinder 150 fluidisch in Kontakt steht und über eine Fluidleitung 16B, in welcher ein Rückschlagventil angeordnet ist, mit der Luftfeder 13 unmittelbar verbunden ist. Darüber hinaus ist die Fluidleitung 14A mit einer Hilfsleitung 14C fluidisch verbunden. Insbesondere ist die Hilfsleitung 14C mit einem Ende an die Fluidleitung 14A angeschlossen und mündet mi ihrem anderen Ende an einer weiteren Öffnung des Druckkolbens 151. Dabei ist sind die beiden Leitungen 14A und 14C derart fluidisch mit dem Zylinder 150 verbunden sind und münden in diesem, dass der Druckkolben 151 zumindest stellenweise zwischen diesen den beiden Öffnungen anordenbar ist. Dabei ist in die Hilfsleitung 14C zumindest ein Drosselventil 140C für einen Druckabbau in der Zusatzvolumeneinrichtung 14 und/oder dem Druckspeicher 16 vorgesehen.

Grundsätzlich sollte angemerkt werden, dass die hier beschriebene Vorrichtung alternativ oder zusätzlich auf einem rotatorischen Prinzip basieren kann. Zudem kann die hier beschriebene Vorrichtung auch in Form einer Horizontalfederung in einem Fahrzeugsitz und/oder auch in Form einer Kabinenfederung im Fahrzeugsitz genutzt werden oder ausgeführt sein.

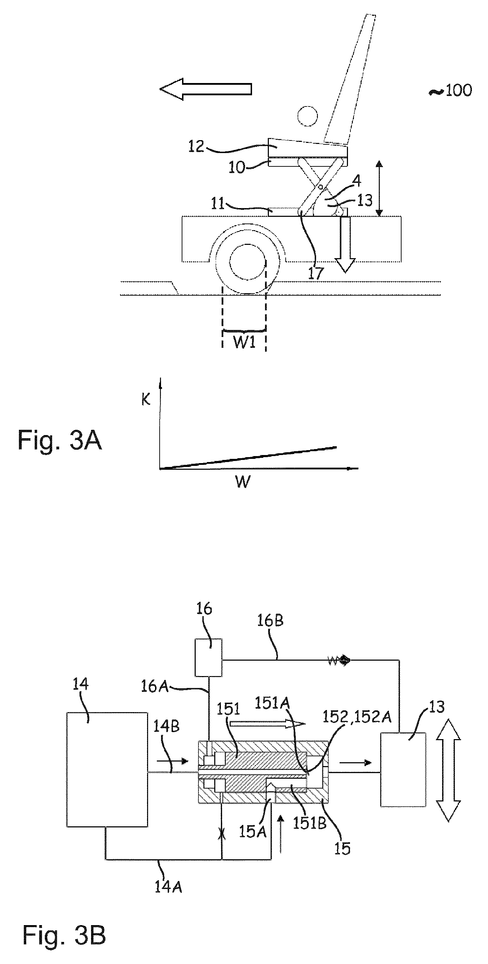

In der Figur 3A ist der in der Figur 2A beschriebene Wagen nochmals gezeigt, wobei sich im Unterschied zu der Figur 2A der Wagen in einer Weg-Phase W1 befindet, in der der Wagen in das Schlagloch einfährt und in dieses einfedert. Während des Einfahrens in das Schlagloch in der Phase W1 federt das erste Teil 10 in Richtung weg von dem zweiten Teil 11 aus, und zwar um genau eine zusätzliche Ausfederhöhe A, welche eine Tiefe des Schlagloches bezeichnet. In dieser Weg-Phase W1 befindet sich daher das erste Teil 10 relativ zum zweiten Teil 11 in einer Höhe H+A. Mit anderen Worten ist in einer derartigen Phase die Federung stark ausgefedert, wodurch ein Innendruck P1 der Luftfeder 13 kleiner ist als ein Innendruck P3 des Druckspeichers, wobei sich durch eine derartige Druckdifferenz der Druckkolben 151, wie in der Figur 3B gezeigt, nach rechts bewegt. Zudem ist in dieser Weg-Phase W1 der Innendruck der Zusatzvolumeneinrichtung 14 ebenso größer als der Innendruck P1 der Luftfeder 13, so dass in jedem Fall das gezeigte Flatterventil 152A geöffnet ist und über die Nach-Rechts-Bewegung zu einem rechten Anschlag innerhalb des Zylinders 150 des Druckkolbens 151 zusätzlich Luft über die Leitung 14A durch die Öffnung 15A innerhalb des Gehäuses der Steuerungseinrichtung 15 durch die Druckkolbenfluidverbindung 151 B hin zu der Luftfeder 13 geleitet wird. Eine derartige Ausgestaltung mit der Druckkolbenfluidverbindung 151 B ermöglicht daher eine besonders schnelle Bewegung des Druckkolbens 151 zu dem rechten Anschlag innerhalb des Zylinders 150, wodurch beispielsweise auch Reaktionszeiten der geänderten Ein- und/oder Ausfederbedingungen verringert werden. Insofern bleibt, wie in der Figur 3A gezeigt, eine Kennlinie flach.

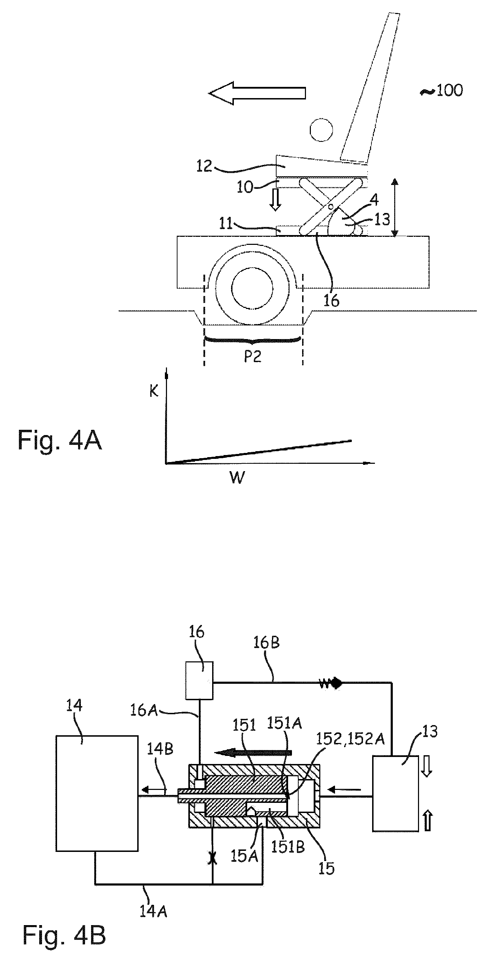

In der Figur 4A befindet sich der gezeigte Wagen vollständig innerhalb des Schlagloches und daher innerhalb einer Weg-Phase W2. Während dieser Weg-Phase W2 ist die Luftfeder 13 im Verhältnis zu der Tiefe A des Schlagloches nur geringfügig eingefedert, so dass sich eine Höhe des ersten Teils 10 zu dem zweiten Teil 11 mit dem Wert H2=H+A-X bemisst, wobei X der Einfederweg innerhalb der Weg-Phase W2 ist. Durch die, wenn auch geringfügige, Innendruckerhöhung innerhalb der Luftfeder 13 wird der Druckkolben von der rechten Anschlagsstellung innerhalb des Zylinders 150 nach links gedrückt, so dass, wie in der Figur 4B gezeigt, eine Fluidverbindung zwischen der Zusatzvolumeneinrichtung 14 über die Fluidleitung 14A und die Öffnung 15A innerhalb der Steuerungseinrichtung 15 durch den Druckkolben 151 selbst versperrt ist. Durch das nur geringfügige Einfedern, beispielsweise im Verhältnis zu der Tiefe A des Schlagloches, bleibt jedoch das Flatterventil 152A immer noch geöffnet, wodurch die Zusatzvolumeneinrichtung 14 auch während eines derartigen Einfederns in der Weg-Phase W2 zu der Luftfeder 13 zugeschaltet bleibt, wodurch die Kraft-Weg-Kennline immer noch flach verläuft. Nach einer derartigen Einfederung erfolgt ein Druckausgleich durch die Steuerungseinrichtung 15, so dass während eines derartigen Druckausgleiches die jeweiligen Innendrücke P1, P2 und P3 der Luftfeder 13, der Zusatzvolumeneinrichtung 14 und des Druckspeichers 16 gleich sind. Mit anderen Worten stabilisiert sich danach eine Einfederhöhe des ersten Teils 10 relativ zu dem zweiten Teil 11.

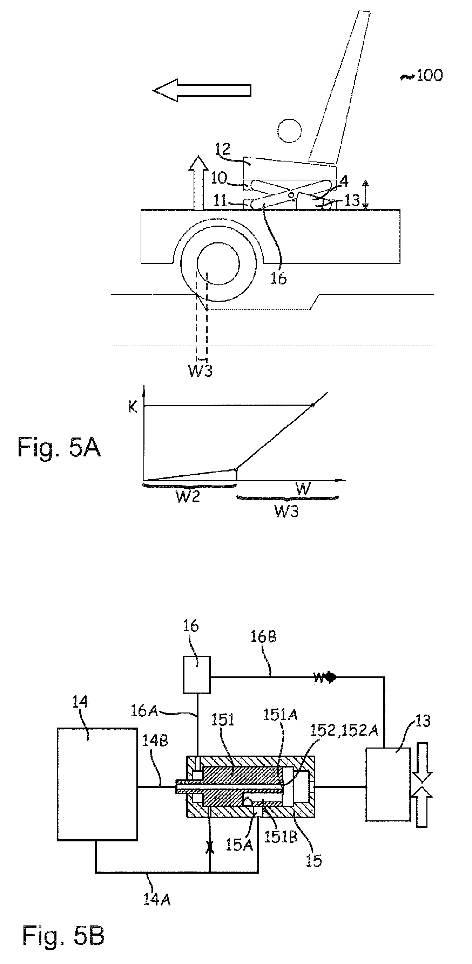

In der Figur 5A ist gezeigt, wie der Wagen die Weg-Phase W3 durchläuft und sich gerade dabei befindet, aus dem Schlagloch wieder herauszufahren, wobei sich, wie in der Figur 5A eindeutig dargestellt, das erste Teil 10 in Richtung des zweiten Teils 11 bewegt und der gesamte Fahrzeugsitz einfedert. Mit anderen Worten wird, wie in der Figur 5B gezeigt, die Luftfeder 13 stark eingefedert und/oder gequetscht, wodurch eine intensive Luftströmung von der Luftfeder 13 in Richtung der Steuereinrichtung 15 entsteht und somit das Flatterventil 152A durch den Gegendruck auf den Druckkolben 151 geschlossen wird. Durch ein derartiges Schließen des Flatterventils 152A wird die Zusatzvolumeneinrichtung 14 von der Luftfeder 13 abgeschnitten, wodurch die Kraft-Weg-Kennlinie ab dem Beginn des Durchlaufens der Weg-Phase W3 beispielsweise abrupt ihre Steigung ändert. Dies führt vorteilhaft dazu, dass durch eine härtere Einstellung der Luftfeder 13 es zu keinem plötzlichen und für die auf dem Sitz befindliche Person unangenehmen Anschlagen auf einem Anschlagsendpunkt kommt. Mit anderen Worten ist daher während dieser Weg-Phase W3 der Innendruck P1 der Luftfeder 13 und der Innendruck P3 des Druckspeichers 16 größer als der Innendruck P2 der Zusatzvolumeneinrichtung. Insbesondere sind in einer derartigen Weg-Phase die beiden Innendrücke P1 und P3 gleich.

Eine derartige Veränderung der Kraft-Weg-Kennlinie beim Durchlaufen der Weg-Phase W3 ist insbesondere in der in der Figur 5A dargestellten Kraft-Weg-Kennlinie gezeigt.

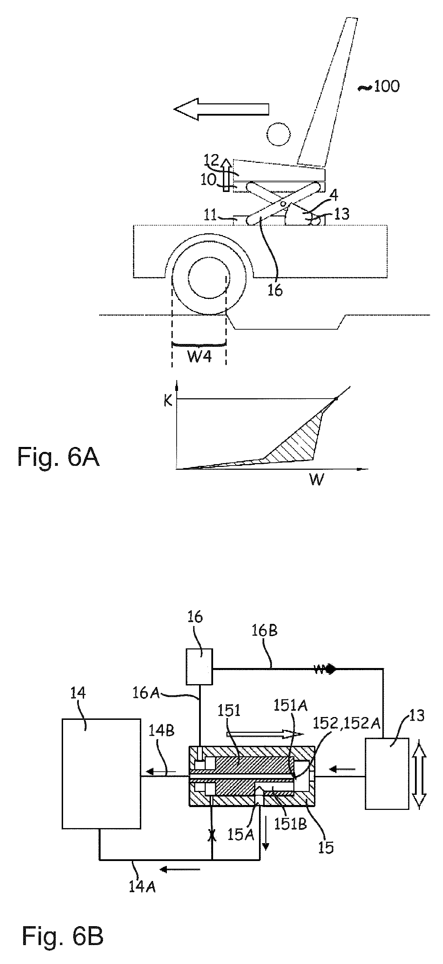

In den Figur 6A und 6B ist eine vierte Phase des Durchlaufens des Schlagloches gezeigt, in der in einer Weg-Phase W4 der Wagen vollständig aus dem Schlagloch herausgefahren ist, wodurch die Luftfeder 13 ausgefedert wird und durch eine derartig entstehende Druckdifferenz und Verringerung des Innendrucks innerhalb der Luftfeder 13, wobei der Innendruck des P3 innerhalb des Druckspeichers 16 größer als der Innendruck P1 der Luftfeder 13 ist, der Druckkolben 151 sich wiederum nach rechts bewegt, wodurch die Luftfeder 13 entlüftet wird. Die in der Luftfeder 13 gespeicherte Energie E wird abgebaut und eine starke Ausfederung wird somit vermieden. Dann kann wiederum ein Druckausgleich erfolgen, indem die einzelnen Drücke P1, P2 und P3 gleich sind, wodurch sich der Druckkolben 151 wieder in seine Ausgangsposition gemäß der Figur 2B bewegt. Ein derartig erwähnter Energieabbau ist in der Kraft-Weg-Kennlinie wie in der Figur 6A gezeigt, welche einer Fläche zwischen den in der Figur 5A gezeigten Kraft-Weg-Kennlinie und einer beispielsweise aus dem Stand der Technik gezeigten Kraft-Weg-Kennlinie entspricht.

Insbesondere ist zudem aus der Figur 6B erkennbar, dass wie erwähnte Entlüftung der Luftfeder 13 von Statten geht, wobei zusätzlich erkennbar ist, dass Luft ausgehend von der Luftfeder 13 zumindest auch durch die Druckkolbenfluidverbindung 151 B hindurch und innerhalb der Fluidleitung 14A in die Zusatzvolumeneinrichtung 14 strömt. Mit anderen Worten überlappen die Öffnung 15A des Gehäuses der Steuerungseinrichtung 15 und eine Öffnung der Druckkolbenfluidverbindung 151 B zumindest teilweise, was ein besonders schnelles und einfaches Entlüften ermöglicht.

Zudem sei angemerkt, dass der Ablauf der Einfederung bei Überfahrt über beispielsweise einen Bordstein zu dem hier gezeigten Ablauf bei der Überfahrt über ein Schlagloch verschieden ist. Bei Überfahrt über den Bordstein sind nämlich der Einfederablauf und die Regelung durch die in obigen Figuren gezeigten und durch diese offenbarten Abläufe folgendermaßen durch die folgende Figurenkombination beschreibbar: (2A, 2B)->(5A, 5B)-> (6A, 6B)


->(3A, 3B)->(4A, 4B)->(2A, 2B).


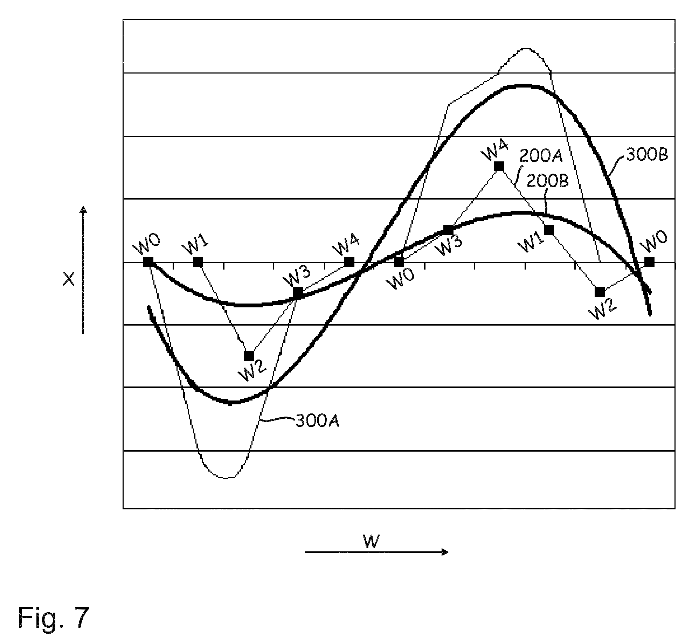

In der Figur 7 ist ein Einfederweg gegen die in den Figuren 2A bis 6A gezeigten unterschiedlichen Weg-Phasen gezeichnet. Dabei entspricht die Kurve 200A gemessenen Einfeder- und Ausfederwegen um eine Nullposition herum, wobei die Kurve 200B eine polynomische Iteration der Kurve 200A darstellt. Im Vergleich dazu ist in dem gleichen Diagramm eine Bewegung, das heißt eine Höhenbewegung des zweiten Teils 11 gezeigt, wobei insbesondere die Kurve 300A die gemessenen Bewegungs- und Höhenorte des zweiten Teils 11 zeigt und die Kurve 300B der dazu polynomisch iterierten stetigen Kurve entspricht. Es kann aus den Kurven unter anderem gelesen werden, dass mittels der hier beschriebenen Vorrichtung 100 und insbesondere der hier beschriebenen Steuerungseinrichtung 15 durch das Zusammenspiel zwischen der Luftfeder 13, der Zusatzvolumeneinrichtung 14 sowie dem Druckspeicher 16 und deren Regelung durch die Steuerungseinrichtung 15 besonders individuell und homogen entsprechend den einzelnen Weg-Phasen das erste Teil 10 im Vergleich zu dem zweiten Teil 11 eingefedert und damit gedämpft werden kann.

Die Erfindung ist nicht durch die Beschreibung anhand der Ausführungsbeispiele beschränkt.

**Bezugszeichenliste**

| A | Tiefe A des Schlaglochs |
| P1 | Innendruck P1 |
| P2 | Innendruck P2 |
| P3 | Innendruck P3 |
| W0 | Weg-Phase W0 |
| W1 | Weg-Phase W1 |
| W2 | Weg-Phase W2 |
| W3 | Weg-Phase W3 |
| W4 | Weg-Phase W4 |
| S0 | Punkt S0 |
| S1 | Punkt S1 |
| 13 | Luftfeder |
| 4 | Federungssystem |
| 10 | erstes Teil |
| 11 | zweites Teil |
| 12 | Masse |
| 13 | Luftfeder |
| 14 | Zusatzvolumeneinrichtung |
| 14A | Fluidleitung |
| 14B | Fluidleitung |
| 14C | Hilfsleitung |
| 140C | Drosselventil |
| 15 | Steuerungseinrichtung |
| 15A | Öffnung |
| 16 | Druckspeicher |
| 17 | Führungseinrichtung |
| 16B | Fluidleitung |
| 100 | Vorrichtung 150 Zylinder |
| 151 | Druckkolben |
| 151 A | Luftöffnung |
| 151 B | Druckkolbenfluidverbindung |
| 152 | Ventileinrichtung |
| 152A | Flatterventil |
| 200A | Kurve |
| 200B | Kurve |

**Patentansprüche**

1. Vorrichtung (100) mit einem Federungssystem, welches ein mit einer Masse (12) beaufschlagtes erstes Teil (10), ein zweites Teil (11) sowie mindestens eine zwischen diesem ersten Teil (10) und diesem zweiten Teil (11) angeordnete Luftfeder (13) aufweist, wobei mindestens eine Zusatzvolumeneinrichtung (14) für Luft vorgesehen ist, deren Volumen gesteuert zu einem Volumen der Luftfeder (18) hinzuschaltbar ist, sowie eine Steuerungseinrichtung (15) für die Hinzuschaltung des Volumens der Zusatzvolumeneinrichtung (14),
**dadurch gekennzeichnet, dass**
über die rein mechanische Steuerungseinrichtung (15), umfassend einen Zylinder innerhalb dessen ein durch eine Veränderung des Innendrucks innerhalb der Luftfeder beweglicher
Druckkolben angeordnet ist, ein Druckspeicher (16) und die Zusatzvolumeneinrichtung (14) derart mit der Luftfeder (13) fluidisch in Kontakt stehen, dass eine Kraft-Weg-Kennlinie der Luftfeder (13) in Abhängigkeit eines Ein-und/oder Ausfederweges und/oder -geschwindigkeit und/oder -beschleunigung des ersten Teils (10) relativ zum zweiten Teil (11) vorgebbar über eine Hinzuschaltung der Zusatzvolumeneinrichtung (14) und/oder des Druckspeichers (16) durch eine Bewegung und/oder eine vorgebbare Stellung des Druckkolbens innerhalb des Zylinders während des Ein- und/oder Ausfederns des ersten Teils (10) relativ zum zweiten Teil (11) veränderbar ist.

2. Vorrichtung (100) nach Anspruch 1,
**dadurch gekennzeichnet, dass**
die Steuerungseinrichtung (15) zumindest eine Ventileinrichtung (152) umfasst, über welche die Stellung des Druckkolbens (151) innerhalb des Zylinders (150) vorgebbar veränderbar und/oder einstellbar ist, wobei in einer Offen-Stellung der Ventileinrichtung (152) die Zusatzvolumeneinrichtung (14) und/oder der Druckspeicher (16) fluidisch zu der Luftfeder (13) hinzugeschaltet sind.

3. Vorrichtung (100) nach Anspruch 2,
**dadurch gekennzeichnet, dass**
die Ventileinrichtung (152) in Form eines Flatterventils (152A) ausgebildet ist, welches an dem Druckkolben (151) über seiner Luftöffnung (151A), über welche die Zusatzvolumeneinrichtung (14) mit der Luftfeder (13) fluidisch miteinander verbindbar ist, angeordnet ist.

4. Vorrichtung (100) nach Anspruch 2 oder 3,
**dadurch gekennzeichnet, dass**
die Ventileinrichtung (152) dann in der Offen-Stellung betreibbar ist, wenn ein Innendruck (P3) des Druckspeichers (16) größer als ein Innendruck (P1) der Luftfeder (13) ist, wobei über die Offen-Stellung der Ventileinrichtung (152) der Druckkolben (151) derart innerhalb des Zylinders (150) verschiebbar ist, dass die Zusatzvolumeneinrichtung (14) hinzuschaltbar ist.

5. Vorrichtung (100) nach zumindest einem der Ansprüche 2 bis 4,
**dadurch gekennzeichnet, dass**
die Ventileinrichtung (152) dann in der Zu-Stellung betreibbar ist, wenn ein Innendruck (P3) des Druckspeichers (16) gleich einem Innendruck (P1) der Luftfeder (13) ist, wobei ein Innendruck (P2) der Zusatzvolumeneinrichtung (14) kleiner als einer der beiden anderen Innendrücke (P1, P3) ist.

6. Vorrichtung (100) nach zumindest einem der Ansprüche 3 bis 5,
**dadurch gekennzeichnet, dass**
in Abhängigkeit des Ein-und/oder Ausfederweges und/oder Geschwindigkeit und/oder Beschleunigung des ersten Teils (10) relativ zum zweiten Teil (11) und des davon abhängigen Innendrucks (P1) der Luftfeder (13) das Flatterventil (152A) selbsttätig öffnet oder schließt.

7. Vorrichtung (100) nach einem der vorhergehenden Ansprüche,
**dadurch gekennzeichnet, dass**
nach dem Einfedern und/oder Ausfedern des ersten Teils (10) ein Druckausgleich durch die Steuerungseinrichtung (15) ausführbar ist, wobei im Druckausgleich die jeweiligen Innendrücke (P1, P2, P3) der Luftfeder (13), der Zusatzvolumeneinrichtung (14) und des Druckspeichers (16) gleich sind.

8. Vorrichtung (100) nach einem der vorhergehenden Ansprüche,
**dadurch gekennzeichnet, dass**
die Luftfeder (13) mit der Zusatzvolumeneinrichtung (14) zusätzlich über eine Druckkolbenfluidverbindung (151B) gekoppelt ist, wobei die Druckkolbenfluidverbindung (151 B) in Form eines Fluidkanals innerhalb des Druckkolbens (151) ausgebildet ist, und wobei über die Druckkolbenfluidverbindung (151 B), über eine Bewegung des Druckkolbens (151) im Zylinder (150), die Zusatzvolumeneinrichtung (14) hinzuschaltbar ist.

9. Vorrichtung (100) nach einem der vorhergehenden Ansprüche,
**dadurch gekennzeichnet, dass**
das erste Teil (10) ein schwingendes Teil ist und dass das zweite Teil (11) ein feststehendes Teil ist.

10. Vorrichtung (100) nach einem der vorhergehenden Ansprüche,
**dadurch gekennzeichnet, dass**
das erste Teil (10) mit dem zweiten Teil (11) über eine Führungseinrichtung (17), insbesondere ein Scherengestell, gekoppelt ist.

**Claims**

1. Device (100) comprising a suspension system which has a first part (10) loaded with a mass (12), a second part (11), and at least one pneumatic spring (13) arranged between said first part (10) and said second part (11), at least one additional-volume apparatus (14) for air being provided, the volume of which can be connected in a controlled manner to a volume of the pneumatic spring (18), and a control apparatus (15) for connecting the volume of the additional-volume apparatus (14), **characterised in that**,
by means of the purely mechanical control apparatus (15), which comprises a cylinder, inside which there is arranged a pressure piston that can be moved by a change in the internal pressure inside the pneumatic spring, a pressure accumulator (16) and the additional-volume apparatus (14) are in fluid communication with the pneumatic spring (13) such that a force-displacement curve of the pneumatic spring (13) can be changed in a predeterminable manner during the deflection and/or rebounding of the first part (10) relative to the second part (11) on the basis of a deflection path and/or rebound path, and/or deflection speed and/or rebound speed, and/or deflection acceleration and/or rebound acceleration of the first part (10) relative to the second part (11), as a result of movement and/or a predeterminable position of the pressure piston inside the cylinder via the addition of the additional-volume apparatus (14) and/or the pressure accumulator (16).

2. Device (100) according to claim 1, **characterised in that** the control apparatus (15) comprises at least one valve apparatus (152), by means of which the position of the pressure piston (151) inside the cylinder (150) can be varied and/or adjusted in a predeterminable manner, the additional-volume apparatus (14) and/or the pressure accumulator (16) being in fluid communication with the pneumatic spring (13) when the valve apparatus (152) is in an open position.

3. Device (100) according to claim 2, **characterised in that** the valve apparatus (152) is in the form of a flutter valve (152A), which is arranged on the pressure piston (151) over its air opening (151 A), via which the additional-volume apparatus (14) and the pneumatic spring (13) can be in fluid communication.

4. Device (100) according to either claim 2 or claim 3, **characterised in that** the valve apparatus (152) can be operated in the open position when an internal pressure (P3) of the pressure accumulator (16) is greater than an internal pressure (P1) of the pneumatic spring (13), the open position of the valve apparatus (152) allowing the pressure piston (151) to be displaceable inside the cylinder (150) such that the additional-volume apparatus (14) can be in communication.

5. Device (100) according to at least one of claims 2 to 4, **characterised in that** the valve apparatus (152) can be operated in the closed position when an internal pressure (P3) of the pressure accumulator (16) is equal to an internal pressure (P1) of the pneumatic spring (13), an internal pressure (P2) of the additional-volume apparatus (14) being less than one of the two other internal pressures (P1, P3).

6. Device (100) according to at least one of claims 3 to 5, **characterised in that** the flutter valve (152A) automatically opens or closes depending on the deflection path and/or rebound path and/or speed and/or acceleration of the first part (10) relative to the second part (11) and on the internal pressure (P1) of the pneumatic spring (13) dependent thereon.

7. Device (100) according to any of the preceding claims, **characterised in that**, after the first part (10) has deflected and/or rebounded, pressure compensation can be performed by the control apparatus (15), the respective internal pressures (P1, P2, P3) of the pneumatic spring (13), the additional-volume apparatus (14) and the pressure accumulator (16) being the same during the pressure compensation.

8. Device (100) according to any of the preceding claims, **characterised in that** the pneumatic spring (13) is additionally coupled to the additional-volume apparatus (14) by means of a pressure piston fluid connection (151B), the pressure piston fluid connection (151 B) being in the form of a fluid channel inside the pressure piston (151) and the additional-volume apparatus (14) being connectable by means of the pressure piston fluid connection (151B), by means of a movement of the pressure piston (151) in the cylinder (150).

9. Device (100) according to any of the preceding claims, **characterised in that** the first part (10) is an oscillatory part and the second part (11) is a stationary part.

10. Device (100) according to any of the preceding claims, **characterised in that** the first part (10) is coupled to the second part (11) by means of a guide apparatus (17), in particular a scissor frame.

**Revendications**

1. Dispositif (100) équipé d'un système de ressort comprenant une première partie (10) sollicitée par une masse (12), une deuxième partie (11) ainsi qu'au moins un ressort pneumatique (13) disposé entre cette première partie (10) et cette deuxième partie (11), dans lequel il est prévu au moins un moyen de volume supplémentaire (14) pour de l'air dont le volume peut être mis en circuit de manière commandée avec un volume du ressort pneumatique (18), ainsi qu'un moyen de commande (15) pour la mise en circuit du volume du moyen de volume supplémentaire (14),
**caractérisé en ce que**
par le biais du moyen de commande (15) purement mécanique, comprenant un cylindre à l'intérieur duquel est disposé un piston de compression mobile sous l'effet d'une variation de la pression interne à l'intérieur du ressort pneumatique, un accumulateur de pression (16) et le moyen de volume supplémentaire (14) sont en contact fluidique avec le ressort pneumatique (13) de façon qu'il est possible de faire varier de manière prédéfinissable une caractéristique force/course du ressort pneumatique (13) en fonction d'une course de compression et/ou de détente et/ou d'une vitesse et/ou d'une accélération de la première partie (10) par rapport à la deuxième partie (11) en enclenchant le moyen de volume supplémentaire (14) et/ou l'accumulateur de pression (16) par un déplacement et/ou par une position prédéfinissable du piston de compression à l'intérieur du cylindre pendant la compression lors de l'opération de compression et/ou de détente de la première partie (10) par rapport à la deuxième partie (11).

2. Dispositif (100) selon la revendication 1, **caractérisé en ce que** le moyen de commande (15) comprend un moyen de soupape (152) par le biais duquel il est possible de faire varier et/ou de régler de manière prédéfinissable la position du piston de compression (151) à l'intérieur du cylindre (150), dans lequel, dans une position ouverte du moyen de soupape (152), le moyen de volume supplémentaire (14) et/ou l'accumulateur de pression (16) sont mis en circuit fluidiquement avec le ressort pneumatique (13).

3. Dispositif (100) selon la revendication 2, **caractérisé en ce que** le moyen de soupape (152) est réalisé sous la forme d'une soupape à clapet (152A), disposée sur le piston de compression (151) au-dessus de son orifice d'aération (151 A), par le biais de laquelle le moyen de volume supplémentaire (14) et le ressort pneumatique (13) peuvent être reliés fluidiquement l'un à l'autre.

4. Dispositif (100) selon la revendication 2 ou la revendication 3, **caractérisé en ce que** le moyen de soupape (152) peut être amené en position ouverte lorsqu'une pression interne (P3) de l'accumulateur de pression (16) est supérieure à une pression interne (P1) du ressort pneumatique (13), dans lequel, par le biais de la position ouverte du moyen de soupape (152), le piston de compression (151) peut être déplacé à l'intérieur du cylindre (150) de manière à mettre en circuit le moyen de volume supplémentaire (14).

5. Dispositif (100) selon l'une au moins des revendications 2 à 4, **caractérisé en ce que** le moyen de soupape (152) peut être amené ensuite en position fermée lorsqu'une pression interne (P3) de l'accumulateur de pression (16) est égale à une pression interne (P1) du ressort pneumatique (13), une pression interne (P2) du moyen de volume supplémentaire (14) étant inférieure à l'une des deux autres pressions internes (P1, P3).

6. Dispositif (100) selon l'une au moins des revendications 3 à 5, **caractérisé en ce que** la soupape à clapet (152A) s'ouvre ou se ferme automatiquement en fonction de la course de compression et/ou de détente et/ou de la vitesse et/ou de l'accélération de la première partie (10) par rapport à la deuxième partie (11) et de la pression interne (P1) du ressort pneumatique (13) qui en dépend.

7. Dispositif (100) selon l'une des revendications précédentes, **caractérisé en ce que**, après la compression et/ou la détente de la première partie (10), une égalisation de pression peut être effectuée par le moyen de commande (15), les pressions internes (P1, P2, P3) respectives du ressort pneumatique (13), du moyen de volume supplémentaire (14) et de l'accumulateur de pression (16) étant égales lors de cette égalisation de pression.

8. Dispositif (100) selon l'une des revendications précédentes, **caractérisé en ce que** le ressort pneumatique (13) est couplé en outre avec le moyen de volume supplémentaire (14) par le biais d'une liaison de fluide de piston de compression (151B), laquelle liaison de fluide de piston de compression (151 B) est réalisée sous la forme d'un conduit de fluide à l'intérieur du piston de compression (151) et le moyen de volume supplémentaire (14) peut être mis en circuit par le biais de la liaison de fluide de piston de compression (151 B) par un déplacement du piston de compression (151) dans le cylindre (150).

9. Dispositif (100) selon l'une des revendications précédentes, **caractérisé en ce que** la première partie (10) est une partie oscillante et la deuxième partie (11) est une partie stationnaire.

10. Dispositif (100) selon l'une des revendications précédentes, **caractérisé en ce que** la première partie (10) est couplée à la deuxième partie (11) par un moyen de guidage (17), en particulier un châssis à pantographe.

Fig. 1A

Fig. 1B

Fig. 2A

Fig. 2B

Fig. 3A

Fig. 3B

**Fig. 4A**

**Fig. 4B**

Fig. 5A

Fig. 5B

Fig. 6A

Fig. 6B

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2468567 A